**Europäisches Patentamt**

**European Patent Office**

**Office européen des brevets**

(19)

(11) Veröffentlichungsnummer: **0 039 883**

**A1**

(12) # EUROPÄISCHE PATENTANMELDUNG

(21) Anmeldenummer: **81103393.5**

(22) Anmeldetag: **05.05.81**

(51) Int. Cl.³: **G 09 F 9/30**

(30) Priorität: **12.05.80 DE 3018099**

(43) Veröffentlichungstag der Anmeldung:
**18.11.81 Patentblatt 81/46**

(84) Benannte Vertragsstaaten:
**AT FR GB**

(71) Anmelder: **SIEMENS AKTIENGESELLSCHAFT** Berlin
und München
Postfach 22 02 61
D-8000 München 22(DE)

(72) Erfinder: **Quella, Ferdinand, Dr.**
Parkstrasse 9
D-8035 Gauting(DE)

(72) Erfinder: **Pape, Heinz, Dipl.-Phys.**
Vogesenstrasse 33 a
D-8000 München 82(DE)

(54) **Vorrichtung zur mehrfarbigen optischen Darstellung von Informationen.**

(57) An drei Seiten eines glasklaren, z.B. plattenförmigen, Lichtleiters (1) werden Fluoreszenzkörper (3) in verschiedenen Fluoreszenzfarben angebracht. Die Fluoreszenzkörper (3) sind vom Lichtleiter (1) durch Lichtventile (2) (z.B. Flüssigkristallzellen) getrennt. Im lichtdurchlässigen Schaltzustand des Lichtventils (2) wird der Lichtleiter (1) mit dem Licht der jeweiligen Fluoreszenzfarbe geflutet. Dadurch lassen sich mit nur einer Anzeige, die sich hinter dem Lichtleiter befindet, verschiedenfarbige Informationen darstellen.

FIG 1

EP 0 039 883 A1

0039883

SIEMENS AKTIENGESELLSCHAFT
Berlin und München

Unser Zeichen
VPA
80 P 7 0 6 4 E

Vorrichtung zur mehrfarbigen optischen Darstellung von
Informationen.

Die Beleuchtung zur verbesserten Erkennbarkeit von
passiven Displays durch lichtsammelnde Fluoreszenzkörper
ist bereits seit längerem bekannt. Realisiert ist sie
z. B. bei dem "fluoreszenzaktivierten Display" (FLAD).
Bei einem FLAD befindet sich eine "Fluoreszenzplatte"
hinter einem Lichtventil, das bereichsweise zwischen
einem lichtdurchlässigen und einem lichtsperrenden Zustand geschaltet werden kann. Diese Platte enthält einen
Fluoreszenzfarbstoff und hat auf ihrer Rückseite Lichtauskoppelstellen in Form von z. B. Kerben oder aufgedruckten Pigmenten, die jeweils mit einem der schaltbaren
Ventilbereiche fluchten. Die Fluoreszenzplatte sammelt
einen Großteil des auf sie treffenden Umgebungslichtes
durch Fluoreszenzstreuung und nachfolgende (Total-) Reflexionen an ihren Grenzflächen, leitet es in ihrem
Inneren fort und koppelt es mit erhöhter Intensität an
den Auskoppelstellen nach vorne aus. Nähere Einzelheiten
über Aufbau und Wirkungsweise eines FLAD's können der
DE-OS 25 54 226 entnommen werden.

In einer anderen Version wird die Erkennbarkeit passiver
Displays durch eine Anordnung der Fluoreszenzplatte vor
dem Lichtventil verbessert (Patentanmeldung 29 10 952).

Beide Versionen besitzen den Nachteil, daß ihre Farbe
durch die einmal vorgenommene Wahl des Fluoreszenzfarbstoffes in der Platte festgelegt ist. Die Beleuchtung erfolgt in der Farbe des Fluoreszenzfarbstoffes in der
Platte.

Wed 1 Plr/8.5.1980

Eine Anzeigenbeleuchtung mit der Möglichkeit eines Farbwechsels würde den Vorteil bieten, daß zusätzlich zu den Anzeigemöglichkeiten des Displays die Farbe der Anzeige eine Zusatzinformation beinhalten kann. Denkbar sind z. B. verschiedenfarbige Kennzeichnungen von Meßbereichen elektrischer Meßgeräte oder Skalenbeleuchtungen von Radios, Fernseher o. ä..

Im einfachsten Fall beinhaltet die Farbe eines Symbols oder einer Signalfläche die gesamte Information, die übermittelt werden soll.

Bei komplexeren Anwendungen, z. B. bei der Wiedergabe von Bildern, ist die Information erst vollständig, wenn sowohl die Form als auch die Farbe dargestellt werden können.

Der Erfindung liegt die Aufgabe zugrunde, eine mehrfarbige optische Darstellung von Information zu ermöglichen.

Diese Aufgabe wird durch eine Vorrichtung mit den Merkmalen des Anspruchs 1 gelöst.

Dabei wird unter einem Fluoreszenzkörper ein Körper verstanden, der aus einem transparenten Material mit einem Brechungsindex $> 1$ besteht, fluoreszierende Partikel enthält und auftreffendes Licht durch Fluoreszenzstreuung und nachfolgende Reflexionen an seinen Grenzflächen sammelt und das Fluoreszenzlicht über Auskoppelbereiche wieder abstrahlt. Derartige Fluoreszenzkörper mit vorteilhaften Formgebungen und Randreflektoren sind in P 25 54 226 und P 27 24 748.9 beschrieben.

Unter einer Anzeigevorrichtung wird jede Vorrichtung verstanden, die zur passiven optischen Darstellung von Information verwendet werden kann, angefangen von Symbolflächen oder -körpern, die durch Farbaufdruck oder Formgebung Licht streuen, reflektieren, absorbieren, umlenken oder dem Licht in anderer Weise Information aufprägen, bis hin zu elektrisch steuerbaren, passiven Anzeigevorrichtungen wie beispielsweise Flüssigkristalldisplays oder elektrochromen Displays.

Die Fluoreszenzkörper werden an den Schmalseiten des Lichtleiters angeordnet. Bei einem viereckigen, plattenförmigen Lichtleiter sind es also maximal vier verschiedenfarbige Fluoreszenzkörper. Das Licht dieser Fluoreszenzkörper wird schaltbar (steuerbar) in den Lichtleiter eingespeist und durch Totalreflexionen im Lichtleiter fortgeleitet. Nur an den am Lichtleiter je nach Anzeigevorrichtung fest oder variabel angebrachten Auskoppelstellen wird es umgelenkt und verläßt den Lichtleiter. Die Auskoppelstellen leuchten also in der Farbe des Fluoreszenzlichtes vor einem geeignet gewählten, vorzugsweise dunklen Hintergrund, der sich vom Beobachter aus hinter dem Lichtleiter befindet. Natürlich wird man durch geeignete Formgebung oder das Anbringen von Reflektoren beispielsweise an den Schmalseiten von Lichtleiter und Fluoreszenzkörpern Lichtverluste zu vermeiden suchen.

Der wesentliche Vorteil der Erfindung liegt darin, daß mehrfarbige passive Displays hergestellt werden können.

Weitere vorteilhafte Ausgestaltungen und Weiterbildungen der Erfindung sind Gegenstand besonderer Ansprüche.

Die Fluoreszenzkörper, deren Licht in den Lichtleiter eingespeist wird, sind selbst keine aktiven Lichtquellen, sondern Lichtsammler. Sie sammeln auftreffendes Licht durch Fluoreszenzstreuung und Lichtleitung. Oft wird kein oder nicht genug Umgebungslicht zur Verfügung stehen, so daß nicht genug Fluoreszenzlicht in den Lichtleiter eingestrahlt wird. Deshalb sind in einer Weiterbildung der Erfindung aktive Lichtquellen, z. B. Leuchtstoff-

0039883
80 P 7 0 6 4 ꞏE

röhren vorgesehen, die die Fluoreszenzkörper beleuchten. Es versteht sich, daß man die Emission der Lichtquelle spektral auf die Absorption des beleuchteten Fluoreszenzkörpers abstimmt, um mit großem Wirkungsgrad Fluoreszenzlicht zu erzeugen.

Eine Steuerung der Einstrahlung von Fluoreszenzlicht in den Lichtleiter kann auf unterschiedliche Weise erzielt werden. In einer Weiterbildung der Erfindung geschieht dies dadurch, daß die Beleuchtung der Fluoreszenzkörper mit Anregungslicht schaltbar ist. Fluoreszenzlicht wird immer nur von den Fluoreszenzkörpern erzeugt und in den Lichtleiter eingestrahlt, die gerade von Anregungslicht beleuchtet werden. Als mögliche Anordnungen kommen in Frage

a) für jeden Fluoreszenzkörper eine Lichtquelle, wobei jede Lichtquelle so abgeschirmt wird, daß sie nur den zu ihr gehörigen Fluoreszenzkörper beleuchtet, oder

b) eine Lichtquelle mit einem beweglichen Reflektor und/oder Blenden zur Beleuchtung verschiedener Fluoreszenzkörper.

Mehrere Lichtquellen eröffnen die Möglichkeit, durch Farbaddition bei z. B. zwei angeschalteten Lichtquellen eine Mischfarbe zu erzeugen.

Diese Art der Steuerung des in den Lichtleiter eingestrahlten Lichtes hat den Vorteil, daß sie besonders verlustarm ist, weil zwischen Lichtleiter und den Fluoreszenzkörpern keine Schaltelemente angebracht werden müssen und deshalb auch eine direkte, feste Verbindung bestehen kann.

In einer anderen Weiterbildung der Erfindung sind zur Steuerung der Einstrahlung von Fluoreszenzlicht in den Lichtleiter Lichtventile zwischen den Abstrahlflächen der Fluoreszenzkörper und dem Lichtleiter vorgesehen. Dabei ist in erster Linie an elektronisch schaltbare Lichtventile, wie z. B. eine Flüssigkristallschicht mit eingelagerten dichroitischen Farbstoffen, gedacht. Der Vorteil dieser Anordnung liegt darin, daß die Einstellung von Fluoreszenzlicht in den Lichtleiter einfach und schnell elektrisch schaltbar ist. Eine Abschirmung der Fluoreszenzkörper gegen unerwünschtes Anregungslicht sowie eine Schaltung ihrer Beleuchtung ist nicht nötig.

Prinzipiell kann ein Lichtventil aber auch mechanisch schaltbar sein. Beispielsweise kann die Einstrahlung von Fluoreszenzlicht in den Lichtleiter unterbrochen werden, indem die Schmalseiten von Lichtleiter und Fluoreszenzkörper mechanisch gegeneinander verschoben werden. Bei Anwendungen, wo ohnehin Wählschalter oder Knöpfe mechanisch betätigt werden müssen, ist dies eine einfache Methode die Farbe einer Anzeige zu ändern.

Alle bisher genannten Weiterbildungen der Erfindung zur Steuerung der Lichteinstrahlung von den verschiedenfarbigen Fluoreszenzkörpern in den Lichtleiter eröffnen durch gleichzeitiges Einstrahlen von Fluoreszenzlicht aus verschiedenen Fluoreszenzkörpern oder sehr schnelle Farbwechsel die Möglichkeit, eine Vielzahl von additiven Mischfarben zu erzeugen.

Nach einer Weiterbildung der Erfindung befinden sich am Lichtleiter ortsfeste Auskoppelstellen. Der Vorteil von ortsfesten Auskoppelstellen, z. B. aufgedruckten, weißen Pigmenten liegt darin, daß ihre Herstellung kostengünstig und technisch unproblematisch ist.

In einer Weiterbildung der Erfindung haben die Lichtauskoppelstellen die Form der darzustellenden Information und bleiben unverändert.

Dabei ist an die Beleuchtung beispielsweise von Skalen oder Schildern gedacht. Z. B. könnte an einem Radiogerät je nach gewähltem Frequenzbereich (KW, MW, UKW) die Skala in einer anderen Farbe aufleuchten.

In einer Weiterbildung der Erfindung ist die Farbe des ausgekoppelten Lichtes die darzustellende Information. Dabei ist an Farbsignale gedacht. Oft genügt als Signal ein Farbwechsel von beispielsweise rot nach grün oder von farblos nach rot. In diesem Fall könnte man auf den klaren Lichtleiter, z. B. eine kreisförmige Pigmentschicht zur Lichtauskoppelung aufdrucken.

In einer Weiterbildung der Erfindung sind die Auskoppelstellen mit elektrooptisch schaltbaren Elementen versehen, die eine Änderung der darzustellenden Information ermöglichen. Auf diese Weise kann eine veränderliche Anzeige in verschiedenen Farben dargestellt werden. Z. B. kann der Meßwert bei einem Voltmeter durch eine Reihe von 7-Segment-Anzeigen dargestellt werden, während der gewählte Meßbereich durch die Farbe der Segmente gekennzeichnet wird, also beispielsweise 0....1 V: rot, 0....10 V: grün, 0....100 V: blau.

In einer Weiterbildung der Erfindung sind die elektrooptisch schaltbaren Elemente Lichtventile (z. B. Flüssigkristallanzeigen), die sich zwischen einem Beobachter und den Lichtauskoppelstellen des Lichtleiters befinden. Auf diese Weise ist die Änderung der darzustellenden Information mit Hilfe von transmissiven passiven Displays möglich, wobei die Anordnung der des fluoreszenzaktivierten Displays analog ist (vgl. DE-OS 25 54 226).

In einer Weiterbildung der Erfindung befinden sich die elektrooptisch schaltbaren Elemente vom Beobachter gesehen hinter dem Lichtleiter und absorbieren abhängig vom Schaltzustand Licht aus dem Lichtleiter oder reflektieren

0039883

es vorzugsweise diffus zum Beobachter hin. Auf diese Weise ist die Änderung der darzustellenden Information mit Hilfe von reflektiven passiven Displays möglich, wobei die Anordnung analog derjenigen beim fluoreszenzaktivierten passiven Display (vgl. Patentanmeldung P 29 10 952.2) ist, mit dem Unterschied, daß der Lichtleiter an die Stelle des Fluoreszenzkörpers tritt.

In einer Weiterbildung der Erfindung werden die Lichtauskoppelstellen am oder im Lichtleiter erzeugt.

Eine wesentliche Begrenzung der Darstellungsmöglichkeiten, die sich gerade durch ein mehrfarbiges Display ergeben, ist durch die örtliche Festlegung der Lichtauskoppelstellen bedingt. Örtlich (und zeitlich) variable Auskoppelstellen würden die Möglichkeit eröffnen, fortlaufende Texte bis hin zu farbigen Bildern darzustellen.

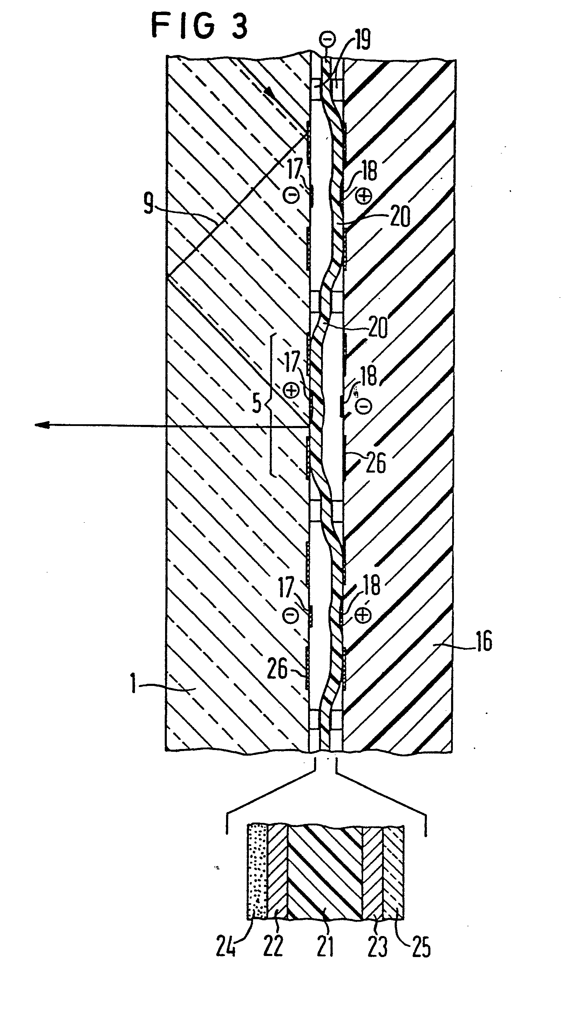

Ein Verfahren, örtlich variable Auskoppelstellen zu erzeugen, beruht auf dem mechanischen oder elektromechanischen Andrücken von lichtstreuenden, vorzugsweise punktförmigen Elementen (s. P 26 13 891.0-32, s. auch Figur 3) an den Lichtleiter. Der Aufbau eines solchen Elementes ist jedoch recht kompliziert.

In einer Weiterbildung der Erfindung besteht der Lichtleiter ganz oder teilweise aus einem flüssigen, thermoplastischen oder elastomeren Material.

Derartige Materialien haben den Vorteil, daß sie leicht oberflächlich deformierbar sind. Deshalb können Lichtauskoppelstellen durch Oberflächendeformationen (Wellen, Runzeln, Einschnürungen) erzeugt werden.

Es sind z. B. eine ganze Reihe von transparenten, flüssigen, thermoplastischen und elastomeren Materialien bekannt, die sich reversibel zwischen flexiblen, transparenten Elektroden bei angelegter Spannung verformen
(siehe J. Weigl, Angew. Chemie 89 (1977) 386 ... 406).
Denkbar ist z. B. ein Aufbau aus einem festen Lichtleiter wie PMMA und einer dünnen auf die Oberfläche aufgebrachten verformbaren Schicht. Natürlich kann auch der
gesamte Lichtleiter aus einem transparenten, reversibel
deformierbaren Material bestehen.

In einer Weiterbildung der Erfindung werden die Lichtauskoppelstellen durch elektrostatisch aufgeprägte Oberflächendeformationen des Lichtleiters gebildet. Viele
Kunststoffe (z. B. Silikonharze) leiten den elektrischen
Strom schlecht. Eine Schicht aus einem solchen isolierenden Material läßt sich nun z. B. durch eine Coronaaufladung aufladen und verformt sich durch die gegenseitige
Ladungsabstoßung, sofern die Viskosität hinreichend klein
ist. Dies ist z. B. bei einem erwärmten Thermoplast,
einem Elastomer oder einer zähen Flüssigkeit der Fall
(siehe J. W. Weigl, Angew. Chemie 89 (1977) S. 386 ... 406
und DE-OS 25 54 185). Die entstehenden Runzeln wirken
lichtstreuend (siehe J. Weigl S. 398). Eine örtlich
variable Aufladung ergibt sich z. B. durch Aufladung mit
einer beweglichen Coronaentladungsquelle. Bei genügend
hoher Beweglichkeit der Molekülketten und damit auch der
anhaftenden Ladungen fließen die Ladungen von selbst in
kurzer Zeit wieder ab. Dies bedeutet, daß die dargestellte Information z. B. durch Temperaturerhöhung wieder
gelöscht werden kann.

In einer Weiterbildung der Erfindung ist der Lichtleiter
ganz oder teilweise mit der Anzeigevorrichtung identisch.

In einer Weiterbildung der Erfindung werden die Lichtauskoppelstellen elektrisch, elektrooptisch, magnetooptisch,
akustisch oder thermisch an einer Grenzfläche des Lichtleiters oder im Lichtleiter erzeugt.

In einer Weiterbildung der Erfindung ist der Lichtleiter ganz oder teilweise ein elektro- oder magnetooptisch schaltbares festes oder flüssiges Medium. In einem solchen Medium können elektronisch ansteuerbar Auskoppelstellen erzeugt werden. Beispielsweise kann der Lichtleiter, in den seitlich Fluoreszenzlicht eingestrahlt wird, aus zwei Glasplatten mit darauf angebrachten transparenten Elektroden bestehen, zwischen denen ein transparenter Flüssigkristall eingeschlossen ist, in dem elektronisch ansteuerbar durch den Effekt der dynamischen Streuung eine Lichtauskoppelstelle erzeugt wird.

In einer Weiterbildung der Erfindung ist die Anzeigevorrichtung ein flacher Bildschirm.

Der Lösungsvorschlag wird im folgenden an Hand einiger Figuren erläutert. In den Figuren sind einander entsprechende Teile mit gleichen Bezugszeichen versehen. Zum Verständnis des Erfindungsgedankens unnötige Teile, wie z. B. elektrische Zuleitungen usw., sind der Übersichtlichkeit halber weggelassen. Es zeigt:

Figur 1 eine Vorrichtung zur mehrfarbigen optischen Darstellung von Informationen mit Lichtventilen zwischen den Fluoreszenzkörpern und dem Lichtleiter und mit ortsfesten Auskoppelstellen am Lichtleiter

a) in Aufsicht
b) im Seitenschnitt

mit einem transmissiven Flüssigkristalldisplay vor dem Lichtleiter,

Figur 2 eine Vorrichtung zur mehrfarbigen optischen Darstellung von Informationen ohne Lichtventile zwischen den Fluoreszenzkörpern und dem Lichtleiter und mit ortsfesten Auskoppelstellen am
Lichtleiter

a) in Aufsicht
b) im Seitenschnitt

mit einem passiven Display hinter dem Lichtleiter,

Figur 3 einen Ausschnitt aus einer Vorrichtung zur mehrfarbigen optischen Darstellung von Informationen
mit elektromechanisch reversibel am Lichtleiter
erzeugbaren Auskoppelstellen.

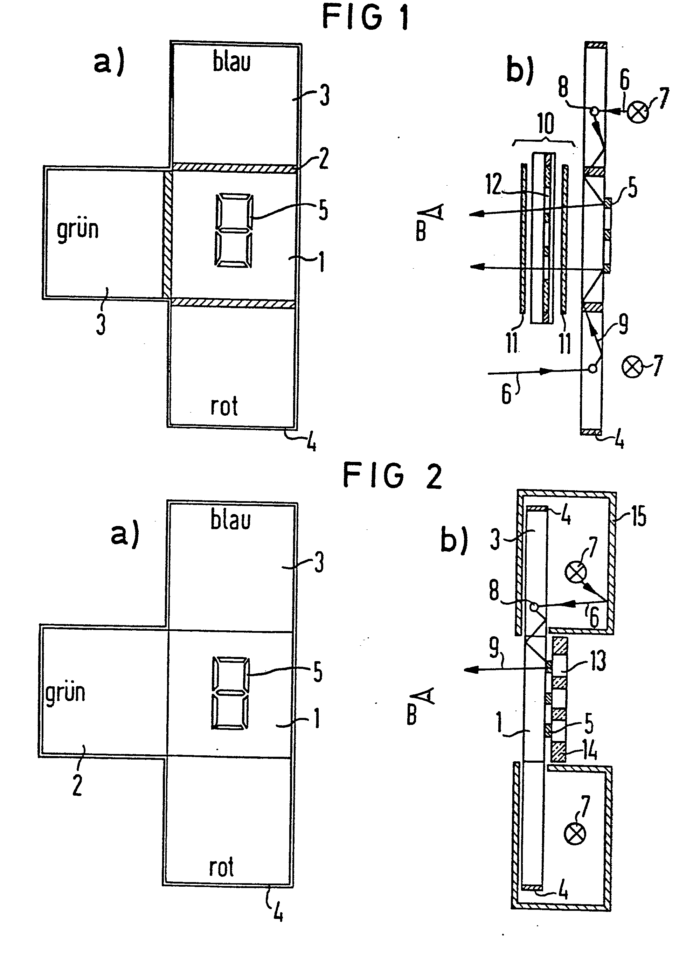

In Figur 1 ist mit 1 ein klarer, plattenförmiger Lichtleiter bezeichnet, z. B. eine Glas- oder PMMA-Platte.
An drei Schmalseiten des Lichtleiters 1 schließen sich
Lichtventile 2 und Fluoreszenzkörper 3 an. Die Fluoreszenzfarben der Fluoreszenzkörper 3 sind rot, grün und
blau. Die ganze Anordnung aus Lichtleiter und Fluoreszenzkörpern ist zur Verminderung von Lichtverlusten an
den äußeren Schmalseiten mit einem Reflektor 4 umgeben.
Am Lichtleiter 1 befinden sich Lichtauskoppelstellen 5,
bei denen es sich beispielsweise um rückseitig aufgedruckte, weiße Pigmente handeln kann. Im dargestellten
Ausführungsbeispiel haben die Auskoppelstellen 5 die
Form einer 7-Segment-Anzeige. Licht 6 aus der Umgebung
oder aus Lampen 7 wird von fluoreszierenden Partikeln 8
in den Fluoreszenzkörpern 3 absorbiert und Fluoreszenzlicht 9 wird wieder emittiert. Das Fluoreszenzlicht 9
wird durch Totalreflexionen und eventuell auch
Reflexionen am Reflektor 4 zum größten Teil im Fluoreszenzkörper 3 gehalten und geleitet.

Bei geöffnetem Lichtventil 2 tritt es in den klaren
Lichtleiter 1 ein, in dem es zum großen Teil über die
Auskoppelstellen 5 in Richtung auf einen Beobachter B
ausgekoppelt wird. Die Lichtauskoppelstellen 5 leuchten vor einem nicht eingezeichneten Hintergrund in der Farbe desjenigen Fluoreszenzkörpers 3, dessen Lichtventil 2 gerade geöffnet ist. Durch gleichzeitiges Fluten des Lichtleiters 1 mit Fluoreszenzlicht 9 aus mehreren Fluoreszenzkörpern 3 oder schnelles Schalten der Lichtventile 2 können an den Auskoppelstellen 5 auch additive Mischfarben erzeugt werden.

Zwischen Beobachter B und den Auskoppelstellen 5 befindet sich ein transmissiver Flüssigkristalldisplay 10 bestehend aus zwei Polarisatoren 11 und einer Flüssigkristallschicht in einem geschlossenen Glasgefäß. Die elektrisch zwischen einem lichtdurchlässigen und einem lichtsperrenden Zustand schaltbaren Bereiche 12 fluchten mit den Auskoppelbereichen 5. Auf diese Weise kann die mit dem Flüssigkristalldisplay 10 dargestellte, veränderliche Information in verschiedenen Farben angezeigt werden.

Figur 2 zeigt wie Figur 1 eine Vorrichtung zur mehrfarbigen optischen Darstellung von Information mit einem Lichtleiter 1, Fluoreszenzkörpern 3, einem Reflektor 4 an den äußeren Schmalseiten der Anordnung und Lichtauskoppelstellen 5 am Lichtleiter 1. Auch in diesem Ausführungsbeispiel haben die Auskoppelstellen 5 die Form einer 7-Segment-Anzeige. Im Gegensatz zu der in Figur 1 skizzierten Ausführungsform sind die Auskoppelstellen 5 hier transparente Stege in Form der Anzeigesegmente, die einen optischen Kontakt zwischen der Lichtleiterplatte 1 und den Bereichen 13 eines passiven Displays 14 herstellen. Die Bereiche 13 können elektrisch zwischen einem Zustand, in dem sie Licht diffus reflektieren, und einem Zustand, in dem sie Licht absorbieren, umgeschaltet werden. Der passive Display 14 kann z. B. ein Flüssigkristalldisplay mit eingelagerten pleochroitischen Farbstoffen und einer rückseitig aufgebrachten weißen Farbschicht sein. In diesem Ausführungsbeispiel einer Vor-

**0039883**

richtung zur mehrfarbigen optischen Darstellung von Information befindet sich jeder Fluoreszenzkörper 3 mit
einer Lampe 7, die das Anregungslicht 6 liefert, in einem
geschlossenen, innen reflektierenden Gehäuse 15. Da immer
nur derjenige Fluoreszenzkörper 3 Fluoreszenzlicht 9 erzeugt und in den Lichtleiter 1 einstrahlt, dessen Lampe 7
eingeschaltet ist, kann auf Lichtventile 4 verzichtet
werden. Der Lichtleiter 1 und die Fluoreszenzkörper 3
sind unmittelbar an ihren Schmalseiten miteinander verbunden.

Figur 3 zeigt einen Ausschnitt aus einer Vorrichtung zur
mehrfarbigen optischen Darstellung von Information, bei
der die Lichtauskoppelstellen 5 am Lichtleiter 1 reversibel elektromechanisch erzeugt werden. Der Lichtleiter 1
ist dabei die vordere Frontplatte eines Displays wie er
in P 26 13 891.0-32 beschrieben ist. Bei einem solchen
Display befinden sich auf dem Lichtleiter 1 und gegenüber
auf einer Trägerplatte 16 streifenförmige Elektroden 17
und 18, die zeilenförmig parallel zueinander laufen. Die
Elektroden 17 auf dem Lichtleiter sind transparent. Ebenfalls parallel zu den Elektroden 17 und 18 befinden sich
sowohl auf dem Lichtleiter 1 als auch auf der Trägerplatte 16 streifenförmige Stege 19, die eine Reihe von
flexiblen, streifenförmigen Membranen 20 in dem Zwischenraum zwischen der Lichtleiterplatte 1 und der Trägerplatte 16 halten. Die Membranstreifen 20 bestehen aus
einem nichtleitenden Grundkörper 21, bei dem es sich um
ein flexibles Kunststoffmaterial handeln kann, der auf
beiden Seiten Elektroden 22 und 23 trägt, die ihrerseits
wieder von Isolierschichten 24 und 25 bedeckt sind. Die
Isolierschicht 24 auf der Seite des Lichtleiters 1 ist
gleichzeitig diffus reflektierend, z. B. eine Schicht
aus weißen Farbpigmenten. In flachen Vertiefungen am
Lichtleiter 1 und dem Träger 16 befindet sich ein dünner
Kontaktfilm 26 aus einer transparenten Flüssigkeit oder
einem transparenten Gel. Die Membranstreifen 20 verlaufen senkrecht zu den Elektrodenstreifen 17 und 18 und bilden hier die Spaltenelektroden für eine Matrixansteuerung des Displays. Je nachdem, auf welche Potentiale die Elektroden 17, 18, 22 und 23 gelegt werden, wird ein Membranstreifen 20 an einem Kreuzungspunkt mit den Streifenelektroden 17 und 18 gegen den Lichtleiter 1 oder den Träger 16 gedrückt. Der Kontaktfilm 26 vermittelt den optischen Kontakt zwischen dem Membranstreifen 20 bzw. seiner weißen Oberfläche 24 und dem Lichtleiter 1. Außerdem hält er die Membran 20 durch Adhäsion am Lichtleiter 1 oder an dem Träger 16 fest auch wenn keine Spannung mehr an den Ansteuerelektroden liegt, so daß Spannungsimpulse zum Schalten des Displays ausreichen. Jeder Bildpunkt des Displays kann unabhängig von den anderen geschaltet werden.

An den Stellen, an denen die Membranstreifen 20 am Lichtleiter 1 mit optischem Kontakt anliegen ist eine Auskoppelstelle 5 erzeugt worden. Das in den Lichtleiter 1 eingestrahlte Fluoreszenzlicht 9 wird an der Schicht 24 diffus reflektiert und tritt nach vorn aus dem Lichtleiter 1 aus. Abgesehen von der Möglichkeit der Farbänderung hat diese Anordnung gegenüber der in P 26 13 891.0-32 einen höheren Kontrast.

Die Erfindung beschränkt sich nicht auf die beschriebenen Ausführungsbeispiele. Insbesondere hinsichtlich der Formgebung, der Anordnung und der Art der Anzeige, die mehrfarbig dargestellt werden soll, ist eine Vielzahl von vorteilhaften Variationen und Kombinationen denkbar.

18 Patentansprüche
3 Figuren

Patentansprüche.

1. Vorrichtung zur optischen Darstellung von Informationen mit einem Lichtleiter, einem oder mehreren Fluoreszenz- körpern und einer Anzeigevorrichtung, d a d u r c h g e k e n n z e i c h n e t , daß zur Darstellung der angezeigten Information in mehreren Farben mindestens an einer Seitenfläche eines glasklaren, z. B. plattenförmigen Lichtleiters (1) ein oder mehrere Fluoreszenzkörper (3) angebracht sind, die in unterschiedlichen Farben fluoreszieren und beispielsweise ebenfalls plattenförmig ausgebildet sind und die steuerbar Fluoreszenzlicht in den mit einer Anzeigevorrichtung versehenen Lichtleiter einstrahlen.

2. Vorrichtung nach Anspruch 1, d a d u r c h g e - k e n n z e i c h n e t , daß Lichtquellen (7) vorge- sehen sind, um die Fluoreszenzkörper (3) aktiv zu beleuchten.

3. Vorrichtung nach Anspruch 2, d a d u r c h g e - k e n n z e i c h n e t , daß die Beleuchtung der Fluoreszenzkörper (3) schaltbar ist.

4. Vorrichtung nach Anspruch 1, d a d u r c h g e - k e n n z e i c h n e t , daß zwischen den Abstrahl- flächen der Fluoreszenzkörper (3) und dem Lichtleiter (1) schaltbare Lichtventile (2) vorgesehen sind.

5. Vorrichtung nach Anspruch 1, d a d u r c h g e - k e n n z e i c h n e t , daß sich am Lichtleiter (1) ortsfeste Auskoppelstellen (5) befinden.

6. Vorrichtung nach Anspruch 1, d a d u r c h g e - k e n n z e i c h n e t , daß die Lichtauskoppelstellen die Form der darzustellenden Information haben und un- verändert bleiben (Skala, Schild).

0039883

7. Vorrichtung nach Anspruch 5, d a d u r c h g e - k e n n z e i c h n e t , daß die Farbe des ausgekoppelten Lichtes die darzustellende Information ist (Farbsignale).

8. Vorrichtung nach Anspruch 5, d a d u r c h g e - k e n n z e i c h n e t , daß die Auskoppelstellen mit elektrooptisch schaltbaren Elementen versehen sind, die eine Änderung der darzustellenden Information ermöglichen.

9. Vorrichtung nach Anspruch 8, d a d u r c h g e - k e n n z e i c h n e t , daß die elektrooptisch schalt- baren Elemente Lichtventile sind (z. B. Flüssigkristallanzeigen), die sich zwischen einem Beobachter und den Lichtauskoppelstellen des Lichtleiters befinden.

10. Vorrichtung nach Anspruch 8, d a d u r c h g e - k e n n z e i c h n e t , daß die elektrooptisch schalt- baren Elemente sich vom Beobachter gesehen hinter dem Lichtleiter befinden und abhängig vom Schaltzustand Licht aus dem Lichtleiter absorbieren oder zum Beobachter hin vorzugsweise diffus reflektieren.

11. Vorrichtung nach Anspruch 1, d a d u r c h g e - k e n n z e i c h n e t , daß örtlich variabel Lichtaus- koppelstellen reversibel am oder im Lichtleiter erzeugt werden.

12. Vorrichtung nach Anspruch 11, d a d u r c h g e - k e n n z e i c h n e t , daß die Lichtauskoppelstellen durch mechanisch oder elektromechanisch bewirkte, optische Ankoppelung von diffusen Reflektoren an den Lichtleiter erzeugt werden.

13. Vorrichtung nach Anspruch 1, d a d u r c h g e - k e n n z e i c h n e t , daß der Lichtleiter ganz oder teilweise aus einem flüssigen, thermoplastischen oder elastomeren Material besteht.

14. Vorrichtung nach Anspruch 11 und Anspruch 13, d a -
d u r c h   g e k e n n z e i c h n e t ,   daß die
Lichtauskoppelstellen durch elektrostatisch aufgeprägte
Oberflächendeformationen des Lichtleiters gebildet
werden.

15. Vorrichtung nach Anspruch 1, d a d u r c h   g e -
k e n n z e i c h n e t ,   daß der Lichtleiter ganz oder
teilweise mit der Anzeigevorrichtung identisch ist.

16. Vorrichtung nach Anspruch 11, d a d u r c h   g e -
k e n n z e i c h n e t ,   daß die Lichtauskoppelstellen
elektrisch, elektrooptisch, magnetooptisch, akustisch
oder thermisch an einer Grenzfläche des Lichtleiters oder
im Lichtleiter erzeugt werden.

17. Vorrichtung nach Anspruch 1, d a d u r c h   g e -
k e n n z e i c h n e t , daß der Lichtleiter ganz oder
teilweise ein elektro- oder magnetooptisch schaltbares,
festes oder flüssiges Medium ist.

18. Vorrichtung nach einem oder mehreren der vorhergehenden Ansprüche, d a d u r c h   g e k e n n z e i c h -
n e t , daß die Anzeigevorrichtung ein flacher Bildschirm ist.

FIG 1

a)   blau

grün

rot

b)

FIG 2

a)   blau

grün

rot

b)

FIG 3

| | Europäisches Patentamt | **EUROPÄISCHER RECHERCHENBERICHT** | Nummer der Anmeldung |
|---|---|---|---|
| | | | EP 81103393.5 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | GB - A - 1 433 327 (PHILIP JOHN AXBEY) <br><br> + Fig. 2; Seite 2, Zeile 10 - Seite 3, Zeile 15 + <br><br> -- | 1,2,4, 7-9,18 | G 09 F 9/30 |
| | DE - A - 2 226 959 (SIEMENS) <br><br> + Fig. 2,3; Seite 5, 2. Absatz bis Seite 6, 2. Absatz + <br><br> -- | 1,2,4, 7,18 | |
| | CH - A5 - 560 944 (CARLO BOSCHETTO) <br><br> + Fig. 1; Spalte 1, Zeilen 6-44; Spalte 2, Zeilen 6-16 + <br><br> -- | 5,6 | **RECHERCHIERTE SACHGEBIETE (Int. Cl.³)** |
| | DE - A1 - 2 619 368 (SIEMENS) <br><br> + Fig. 2; Seite 9, Zeilen 18-21 + <br><br> -- | 2,3 | G 09 F 9/00 <br> G 09 F 13/00 <br> G 02 F 1/00 |
| D | DE - A1 - 2 613 891 (SIEMENS) <br><br> + Fig. 1-3; Seite 7, 2. Absatz - Seite 8, letzte Zeile + <br><br> ---- | 11,12, 14-16, 18 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| WIEN | 28-07-1981 | BENISCHKA |

EPA form 1503.1 06.78